# EUROPÄISCHE PATENTANMELDUNG

(11) **EP 0 561 283 A1**
(43) Veröffentlichungstag der Anmeldung: **22.09.1993**
(21) Anmeldenummer: 93103973.9
(22) Anmeldetag: 11.03.1993
(51) Int. Cl.: A61C 19/00, B24B 3/60

(54) **Schleifgerät für zahnärztliche Behandlungsinstrumente**

(30) Priorität: 17.03.1992 DE 9203557 U
(71) Anmelder: Hegen, Rudolf, D-85092 Kösching (DE)
(72) Erfinder: Hegen, Rudolf, D-85092 Kösching (DE)
(74) Vertreter: Freimuth, Peter

(57) **Zusammenfassung**

Schleifgerät für zahnärztliche Behandlungsinstrumente, wobei das Behandlungsinstrument in einer Kassette (2) befestigt wird und ein auf der Kassette angegebener Instrumentencode der im Schleifgerät vorhandenen Elektronik (6,7,8) mitteilt, um welches Instrument es sich handelt. Die Angaben bewirken dann die elektronisch gesteuerte Stellung der Schleifscheiben (1) zur Instrumentenspitze mit einer gleichzeitigen vertikalen und halbkreisförmig ausgeführten Drehbewegung des gesamten Schleifkörpers.

## Beschreibung

1. Mit dem Gerät werden die zahnärzlichen Instrumente "Scaler" und "Curette", die bei der Behandlung von Paradontose zur Beseitigung von Ablagerungen (Konkrementen) an Zahn und Zahnwurzel oder zum gezielten Heraustrennen erkrankten Zahnfleisches aus der Zahnfleischtasche eingesetzt werden, nach mehrfachem Gebrauch neu geschliffen.
   Es handelt sich hierbei um 2 unterschiedliche Instrumententypen. Der Scaler ist ein hakenförmiges Instrument mit einem dreieckigen Querschnitt, der sich zur Spitze verlaufend verjüngt.
   Die Curette ist ebenfalls ein hakenförmiges Instrument, allerdings mit einem halbkreisförmigen Querschnitt, der zum Arbeitsende hin gleichförmig ausläuft.
   Diese Instrumente unterscheiden sich von übrigen chirurgischen Instrumenten dadurch daß sie aufgrund eines ständig notwendigen Nachschlelfens Verbrauchsmaterialien darstellen. Das Nachschleifen muß sehr vorsichtig erfolgen, um die Abriebverluste an den Instrumenten möglichst gering zu halten.
   Ohne einen maschinellen Schleifvorgang steht es im Belieben der mit dem Nachschleifen beauftragten Person, in welcher Art, Weise und insbesondere mit welcher Kraft das Nachschärfen erfolgt, so daß eine große Unsicherheit beim Nachschleifen besteht und sich enorme Unterschiede in der Standzeit der Instrumente ergeben.
   Durch eine falsche Anwendung der Schleifsteine kann es deshalb in relativ kurzer Zeit zum völligen Verschleifen der Instrumente kommen.
2.
   a) Bekannt ist bisher ein von Hand betriebenes Schleifgerät (DE 40 10 635 C1), bei dem die nachzuschleifenden Instrumente in einer Halterung oberhalb einer waagerecht starr angebrachten Schleifbahn in schräger Stellung befestigt werden und der Schleifvorgang durch ein manuelles Drücken der Haltevorrichtung einschließlich des Instruments in vertikaler Richtung bewirkt wird.
      Bei diesem Schleifgerät erfolgt der Schleifvorgang aufgrund der Arretierung des Instruments lediglich an einer bestimmten und deshalb vorgegebenen Stelle, so daß die Position des Instruments durch manuelles Nachstellen verändert werden muß, wenn der Schleifvorgang an einer anderen Stelle des Instruments fortgesetzt werden soll. Eine einheitliche Führung des Instruments ist auf diese Weise nicht möglich, so daß es zur Kanten- und Rillenbildung am Instrument kommen kann, die zu Verletzungen des zu behandelnden Patienten führt.
   b) Ferner ist bekannt ein Schleifgerät (DE 39 34 365 C1), bei dem die zu bearbeitenden Instrumente auf einem Drehteller in mehreren Gerätehaltern befestigt werden und durch eine Drehbewegung des Tellers je an einer oben bzw. unten im Gerät halbkreisförmig angeordneten Schleifbahn entlanggeführt werden.
      Auch dieses Schleifgerät erfordert die manuelle Veränderung der jeweils fest vorgegebenen Stellung des Instruments, so daß es auch hier wegen eines fehlenden fließenden Übergangs zu Kanten und Rillenbildung kommt.
   c) Darüberhinaus ist bekannt ein Schleifgerät (US 25 78 309) mit einer horizontal drehbaren Schleifscheibe und einer an der vertikal verlaufenden Drehachse angebrachten Instrumentenhalterung, in der das zu schleifende Instrument starr befestigt und an die Schleifscheibe herangeführt wird.
      Auch bei diesem Schleifgerät muß die Position des Instruments durch ein manuelles Nachstellen verändert werden, so daß es auch hier zu einem unterschiedlichen Abrieb und somit zur Kanten- und Rillenbildung kommen kann.
   d) Bekannt ist auch ein Schleifgerät (US 23 24025) mit einem waagerecht angeordneten Schleifblock und einer in seiner Mitte senkrecht hierzu befestigten Instrumentenhalterung, die durch verschiedene Vertiefungen unterschiedliche Befestigungen und eine entsprechende Anzahl von Anstellungswinkeln der zu behandelnden Instrumentenspitzen ermöglicht.
      Dieses Gerät erfordert ebenfalls eine manuell durchzuführende Veränderung der Position des zu schleifenden Instruments, wodurch der Schleifvorgang unterbrochen wird und ein gleichmäßiger Schliff mit der Folge, daß es zu Kanten- und Rillenbildung kommen kann, nicht möglich ist.
   e) Ebenfalls bereits bekannt ist ein Schleifgerät (DE 23 59 560 D2) für Werkinstrumente mit ebenen Arbeitsflächen wie z.B. Schneidewerkzeugen, bei dem das zu schleifende Werkzeug von vorne an eine rechtwinklig hierzu verlaufende Schleifscheibe herangeführt wird und sich in einem beweglichen Instrumentenhalter befindet, der mittels einer Hydraulik eine Verschiebung des Instruments an der Schleifscheibe ermöglicht.
      Dieses Gerät ist zum Nachschleifen zahnärztlicher Behandlungsinstrumente nicht geeignet. Zwar wird bei dem Gerät das zu bearbeitende Werkstück ebenfalls von vorne an die maschinell gedrehte Schleifscheibe herangeführt, die Veränderung der Werkstückposition erfolgt jedoch ausschließlich auf der horizontalen Ebene, was für ein ordnungsgemäßes Nachschleifen des Scalers mit einem dreieckigen Querschnitt sowie der Curette mit einem halbkreisförmigen Querschnitt nicht ausreicht.
   f) Es ist auch ein Schleifgerät (DE 83 06 028 U1) bekannt, bei dem ein Werkzeug in einer beweglichen Spindel befestigt wird und durch einen vorher bestimmbaren Schwenkvorgang der mit dem Schleifvorgang gewünschte Abtrag des Werkzeugs erreicht wird.
      Auch mit diesem Gerät ist ein gleichmäßiges Nachschleifen der zahnärztlichen Behandlungsinstrumente nicht möglich, da gerade ein vorher zu bestimmender Instrumentenabtrag verhindert werden soll.
      Der Erfindung liegt das Problem zugrunde, die zahnärztlichen Behandlungsinstrumente tatsächlich nur an den zu schleifenden Stellen zu bearbeiten sowie den Abrieb am Instrument möglichst gering zu halten und die Instrumentenform nicht zu verändern. Gleichzeitig soll durch eine Standartisierung die Bearbeitung auch durch eine nicht geübte Person ermöglicht werden.
      Diese Aufgabe wird durch die im Patentanspruch 1 aufgeführten Merkmale erfüllt.
      Das zu schleifende Instrument wird zunächst außerhalb des Schleifgerätes in einer Kassette, deren Haltevorrichtung lediglich eine einzige Position des Instruments ermöglicht, befestigt. Nach dem Schließen der Kassette ragt die zu bearbeitende Instrumentenspitze vorne aus der Kassette heraus.
      Die Kassette wird anschließend von vorne über eine Schiene in das Schleifgerät hineingeschoben. Kassette und Instrumentenspitze befinden sich jetzt in einer Position, die von Hand nicht mehr beeinflußt werden kann.
      Durch auswechselbare Kassetteneinsätze sind Instrumente mit verschiedenartigen Formen einlegbar.
      Ein auf der Kassette angebrachter Instrumentencode teilt dem Gerät mit, um welches Instrument es sich handelt. Die Übertragung der Kassettencodierung erfolgt über einen Sensor. Dabei wird die Art des Instruments erfaßt. Die elektronische Steuerung bewirkt dann, daß sich die Schleifscheiben gemeinsam mit Achse und Motor auf einer halbkreisförmig senkrecht nach oben führenden Drehschiene um das zu bearbeitende Instrument bewegen.
      Auf der der Instrumentenspitze gegenüberliegenden Längsseite des Schleifgerätes befindet sich eine von 2 links und rechts montierten Elektromotoren angetriebene in der Mitte geteilte Achse, auf der für den Scaler genau in der Mitte und somit vor der zu schleifenden Instrumentenspitze Schleifscheiben entweder aus Leder oder aus Stein angebracht sind. Jeweils links und rechts der Schleifscheiben für den Scaler befindet sich je eine aus den gleichen Materialien bestehende Scheibe für die Curette, die in Laufrichtung eine halbkreisförmige Vertiefung aufweist.
      Die Schleifscheiben für den Scaler werden V-förmig zueinandergestellt, wobei sich die Öffnung des V aufgrund einer elektronischen Steuerung automatisch der Form des zu schleifenden Instruments anpaßt. Hierdurch kann das Instrumentenarbeitsende von allen Seiten gleichmäßig geschliffen werden.
      Selbst modifizierte Scaler mit schiffsbugförmigem Querschnitt werden durch die Beweglichkeit der Schleifscheiben optimal bearbeitet.
      Bei den Schleifscheiben für die Curette unterbleibt die V-förmige Einstellung. Das Arbeitsende des Instruments wird so an die Schleifscheibe herangeführt, daß es in der halbkreisförmigen Vertiefung zum liegen kommt . Durch die oben beschriebene Vertikalbewegung werden die Lateralflächen einschließlich der Instrumentenspitze gleichmäßig geschliffen.
      Der Vorteil der Erfindung liegt darin, daß das Gerät aufgrund der elektronischen Steuerung und der federnden Lagerung der Motoren den geringstmöglichen Druck auf die zu schleifenden Stellen des Instrumentenarbeitsendes ausübt, wodurch lediglich ein minimaler Abrieb erreicht wird und das Instrument die längst mögliche Gebrauchsdauer behält.
      Ferner erfolgt der Schleifvorgang in einem kontinuierlichen Ablauf, so daß an den teilweise stark gebogenen Instrumentenspitzen keine Kanten- und Rillenbildung eintritt. Die Instrumentenform bleibt unverändert.
      Darüberhinaus kann der Schleifvorgang von jeder auch völlig ungeübten Person bei jederzeitigem Erreichen des optimalen Schleifergebnisses durchgeführt werden.

### Ausführungsbeispiel

Im folgenden wird ein Ausführungsbeispiel der Erfindung anhand der Zeichnungen gegeben.

Es zeigen
- Figur 1: das Schleifgerät aus der Sicht von oben
- Figur 2: die Kassette mit Instrumentenhalterung
- Figur 3: das Schleifgerät in Seitenansicht
Das zu schleifende Instrument wird zunächst in Figur 2 in der Halterung (12) der Kassette (2) befestigt, die Instrumentenspitze ragt aus dem vorderen Teil (13) heraus. Der Deckel (11) wird abgeschlossen.

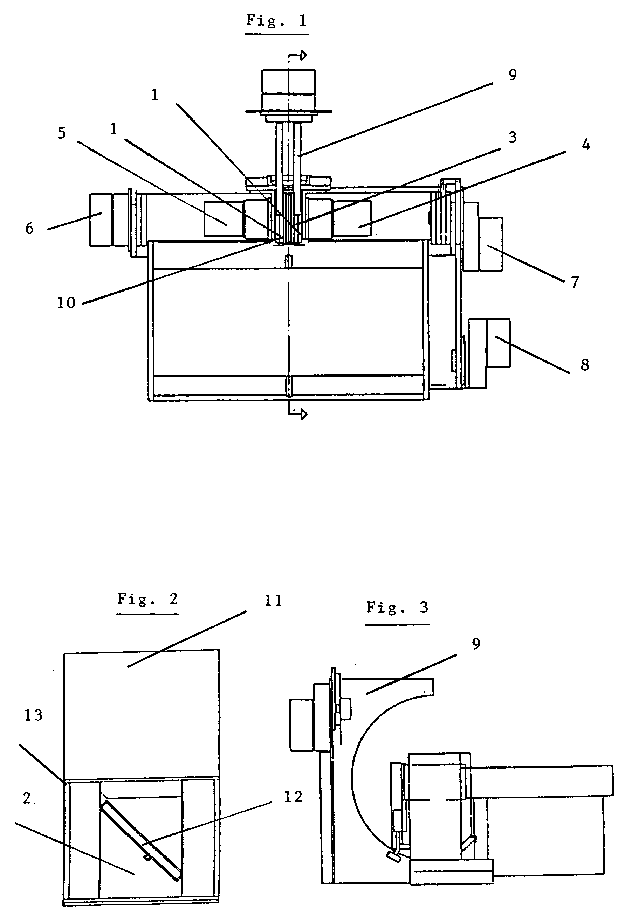

Die Kassette wird von vorne in das Schleifgerät (Figur 1) hineingeschoben, so daß sich die Instrumentenspitze vor den Schleifscheiben (1) befindet. Die Schleifscheiben werden durch die Motoren (4 und 5) gedreht. Durch die Elektronik (6,7 und 8) wird die V-förmige Anordnung der Schleifscheiben reguliert und diese an die Instrumentenspitze herangeführt. Die Achse einschließlich Schleifscheiben und Motoren bewegt sich auf der Schiene (9) nach oben um das Instrument herum.

## Patentansprüche

1. Schleifgerät in einem geschlossenen Gehäuse mit Schleifscheiben zur Aufnahme von Kassetten mit zahnärztlichen Behandlungsinstrumenten,
dadurch gekennzeichnet,
daß die Schleifscheiben (1) drehbar sind und die Kassette (2) so befestigt ist, daß sie während des Schleifvorgangs nicht verschiebbar ist.

2. Schleifscheiben nach Patentanspruch 1
dadurch gekennzeichnet,
daß sie auf der Längsseite des Gerätes auf einer drehbaren Achse (3) nebeneinander angeordnet sind und durch 2 Elektromotoren (4) und (5) angetrieben werden.

3. Schleifscheiben nach Patentanspruch 1
dadurch gekennzeichnet,
daß sie sich gemeinsam mit Achse und Motor mittels elektronischer Steuerung (6, 7, und 8) auf einer halbkreisförmig senkrecht nach oben führenden Drehschiene (9) um das zu bearbeitende Instrument bewegen.

4. Schleifscheiben nach Patentanspruch 1
dadurch gekennzeichnet,
daß sie entweder aus Leder, aus Stein oder anderen Materialien bestehen und durch eine in Längsrichtung verlaufende Vertiefung (10) eine Bearbeitung der Instrumente von 2 sowie 3 Seiten ermöglichen.

5. Kassette nach Patentanspruch 1
dadurch gekennzeichnet,
daß sie durch einen in Längsrichtung befestigten Deckel (11) aufklappbar ist und das Behandlungsinstrument am Kassettenboden durch eine Klemmvorrichtung (12) befestigt ist.

6. Kassette nach Patentanspruch 1
dadurch gekennzeichnet,
daß die am Kassettenboden angebrachte Klemmvorrichtung je nach dem zu verarbeitenden Instrument unterschiedlich angeordnet bzw. geformt ist.

7. Kassette nach Patentanspruch 1
dadurch gekennzeichnet,
daß sie in Längsrichtung gesehen vorne geöffnet ist und aus der Öffnung (13) der zu bearbeitende Instrumententeil hervorsteht.
